# EUROPEAN PATENT SPECIFICATION

(11) **EP 3 047 733 B1**
(45) Date of publication and mention of the grant of the patent: **27.10.2021**
(21) Application number: 14845356.6
(22) Date of filing: 11.09.2014
(51) Int. Cl.: A23G 1/00, A23D 9/00, A23G 1/30

(54) **CHOCOLATE COMPOSITION**
SCHOKOLADE ZUSAMMENSETZUNG
COMPOSITION DE CHOCOLAT

(30) Priority: 19.09.2013 JP 2013194445
(43) Date of publication of application: 27.07.2016
(73) Proprietor: The Nisshin OilliO Group, Ltd., Tokyo 104-8285 (JP)
(72) Inventor: OONISHI, Kiyomi, Yokosuka-shi Kanagawa 239-0832 (JP)
(74) Representative: Dennemeyer & Associates S.A.
(86) International application number: PCT/JP2014/004694
(87) International publication number: WO 2015/040839

(56) References cited:
- EP-A1- 2 554 185
- JP-A- H0 223 833
- JP-A- H06 105 655
- JP-A- 2000 309 794
- JP-A- 2003 517 051
- JP-A- 2005 507 028
- JP-A- 2009 195 221
- JP-A- 2013 507 117
- US-A- 5 424 090
- US-A- 5 589 216
- US-A1- 2003 215 556
- US-A1- 2004 191 391
- KJOELLER KATRINE: 'CHOCOLATE FORMING/EXTRUSION String it out' CONFECT. PROD. vol. 75, no. 2, 2009, pages 31 - 32, XP009132758
- ENGMANN J. ET AL.: 'SEMI-SOLID PROCESSING OF CHOCOLATE AND COCOA BUTTER Modelling Rheology and Microstructure Changes During Extrusion' FOOD BIOPROD. PROCESS. vol. 84, no. C2, 2006, pages 102 - 108, XP022525602
- None

## Description

### CROSS-REFERENCE TO RELATED APPLICATION

This application claims priority from Japanese Patent Application No. 2013-194445 filed with the Japan Patent Office on September 19, 2013.

### TECHNICAL FIELD

The present invention relates to chocolate including oils and fats that form a continuous phase.

### BACKGROUND ART

Chocolate products in the market undergo diversification. For example, a generally basic molding method of solid-type chocolate is not only one type, and falls roughly into a molding process using a mold and a non-molding process without using a mold.

In the molding process, various products can be manufactured by using various molds. Representative examples of such various products include a chocolate bar manufactured using a flat mold and a hollow chocolate manufactured using a coupling mold. The molding process is characterized by small variations in weight among products and good gloss of a portion in contact with a mold surface.

On the other hand, in the non-molding process, the shape is mainly varied by changing cut dimensions and changing the hole diameter of an extrusion nozzle to change the size. For this reason, the degree of freedom in variations in shape is small. However, the non-molding process has an advantage that the steps are simpler and the manufacturing efficiency is higher compared to the molding process.

The molding efficiency and the product fraction defective of the non-molding process are significantly influenced by the degree of plasticity in the course of cooling and solidification of chocolate. For example, in the case of a layer cut apparatus, melted chocolate is firstly directly dropped on a conveyor belt operating at a constant speed. Subsequently, slits placed on the belt allow chocolate dropping between the slits to have a constant thickness. This chocolate is cooled at an appropriate temperature and solidified. Pieces of the solidified chocolate are cut lengthwise with a plurality of round blade cutters. The cutters are installed equally spaced apart from each other in a right angle direction to a belt operating direction and disposed in a belt operating direction. Furthermore, this chocolate is cut widthwise by vertically moving a horizontal edged tool disposed on the belt at a right angle to a belt operating direction. In this manner, a cubic crude chocolate product is manufactured. In this case, when solidification by cooling is quick, the chocolate becomes excessively hard, causing cutting the chocolate with a cutter portion to become difficult. As a result, the chocolate is randomly fractured, disabling manufacturing of normal chocolate.

On the other hand, when an extruder is used, cooled and solidified chocolate is stored at a temperature that allows the chocolate to be softened again. Thereafter, the softened chocolate in the shape of blocks is put into an extruder, thereby to perform extrusion from a nozzle. Even in this case, when the block-shaped chocolate is excessively hard, a product extruded from a nozzle has a surface having been changed in color to white due to friction with a nozzle. In some cases, ejection of a product from a nozzle is disabled.

As described above, the non-molding process is a molding method which takes advantage of shape retention properties of chocolate in a semi-solidified state and weak adhesion properties among products. In brief, the physical properties of chocolate have a significant influence on its production efficiency. Therefore, in the non-molding process, maintaining a good plasticized state as long as possible in the manufacturing steps of chocolate directly leads to improvement of efficiency.

For imparting plasticity to chocolate, there is often taken a measure of formulating liquid oil in chocolate. Here, as the liquid oil to be formulated, a high melting point component (fully hydrogenated oil or the like) is used in combination for preventing the liquid oil from exuding. Accordingly, such chocolate does not have good melting mouthfeel. Other than liquid oil, for example, JP-A-5-192080 and JP-A-6-105655 disclose that disaturated monolinoleate is used as part of fats and oils to impart plasticity to chocolate. However, linoleic acid is likely to be oxidized. For this reason, the flavor of chocolate deteriorates earlier. Thus, handling of linoleic acid is associated with difficulties. In addition, US 5424090 discloses a process of making a hard butter composition containing an anti-blooming agent. Ep 2554185 describes an interesterification of tripalmitin and capric acid to produce glycerides. US 2003/215556 discloses the production of fats having reduced calorie, comprising 45% C6-C10 fatty acids and 28% C16-C18 saturates. US 2004/191391 describes oil and fat composition comprising 22% C6-C10 fatty acids and 37% C16-C18 saturates.

### CITATION LIST

### PATENT LITERATURE

PATENT LITERATURE 1: JP-A-5-192080
PATENT LITERATURE 2: JP-A-6-105655

### SUMMARY OF THE INVENTION

### PROBLEMS TO BE SOLVED

An object of the present invention is to provide chocolate containing oils and fats having good melting mouthfeel and plasticity imparted thereto.

### SOLUTION TO THE PROBLEMS

The present inventor intensively conducted researches to solve the above-described problems. As a result, the present inventor found that the problems can be solved by chocolate containing oils and fats that form a continuous phase, the fats and oils contained in the chocolate contain 20 mass% or more of interesterified oils and fats comprising constituent fatty acid.

Of a total amount of constituent fatty acid, constituent fatty acid of 6 to 10 carbons represents 20 to 65 mass%, and saturated constituent fatty acid of 16 to 18 carbons represents 35 to 80 mass%. Furthermore, the content of saturated constituent fatty acid of 16 carbons in the saturated constituent fatty acid of 16 to 18 carbons is 20 mass% or more.

According to an embodiment of the present invention, there can be provided chocolate having been subjected to a non-molding process. Furthermore, there is disclosed a method of manufacturing chocolate, including: cooling and solidifying melted chocolate that contains fats and oils containing 20 mass% or more of the interesterified oils and fats; and performing a non-molding process.

### EFFECT OF THE INVENTION

According to the present invention, there can be provided chocolate. The chocolate that has good melting mouthfeel and plasticity as well as is suitable for a non-molding process by using the interesterified fats and oils.

### EXPLANATION OF THE INVENTION

Hereinafter, the present invention will be described in order.

### Interesterified oils and fats

Of the total amount of constituent fatty acid contained in the interesterified oils and fats, constituent fatty acid of 6 to 10 carbons represents 20 to 65 mass%, and saturated constituent fatty acid of 16 to 18 carbons represents 35 to 80 mass%. Furthermore, the content of saturated constituent fatty acid of 16 carbons in the above-described saturated constituent fatty acid of 16 to 18 carbons is 20 mass% or more. Here, the "constituent (saturated) fatty acid" contained in fats and oils means (saturated) fatty acid from which each of one or more acyl groups constituting the molecule of an ester compound contained in the fats and oils is derived. The above-described interesterified oils and fats include not only common interesterified oils and fats obtained by an interesterification reaction of fats and oils but also the following ester synthetic fats and oils. That is, the ester synthetic fats and oils are synthesized (ester-bound) according to a method known in the art with a mixture of fatty acid and at least one selected from glycerol, monoacylglycerol and diacylglycerol. Furthermore, the above-described ester synthetic fats and oils contain constituent fatty acid of the above-described composition.

The interesterified oils and fats include constituent fatty acid of 6 to 10 carbons. Of the total amount of constituent fatty acid contained in the above-described interesterified oils and fats, constituent fatty acid of 6 to 10 carbons represents 20 to 65 mass%. The content (hereinafter, also indicated as C6 to 10) of the constituent fatty acid of 6 to 10 carbons in the constituent fatty acid contained in the interesterified oils and fats is preferably 35 to 65 mass%, more preferably 40 to 60 mass%, and further preferably 42 to 58 mass%. The above-described constituent fatty acid of 6 to 10 carbons is preferably linear saturated fatty acid. Specifically, the constituent fatty acid of 6 to 10 carbons is preferably n-hexanoic acid, n-octanoic acid or n-decanoic acid. The above-described constituent fatty acid of 6 to 10 carbons is preferably constituent fatty acid of 8 carbons or 10 carbons. Furthermore, the content of the constituent fatty acid of 6 carbons in the above-described constituent fatty acid of 6 to 10 carbons is preferably 20 mass% or less, and more preferably 10 mass% or less. Similarly, the content of the constituent fatty acid of 10 carbons is preferably 30 mass% or more, and more preferably 50 mass% or more. When the content of the constituent fatty acid of 6 to 10 carbons in the constituent fatty acid contained in the interesterified oils and fats falls within the above-described range, plasticity can be suitably imparted to chocolate containing the interesterified oils and fats.

The interesterified oils and fats contain saturated constituent fatty acid of 16 to 18 carbons. Of the total amount of constituent fatty acid contained in the above-described interesterified oils and fats, constituent saturated fatty acid of 16 to 18 carbons represents 35 to 80 mass%. The content (hereinafter, also indicated as C16 to 18) of the saturated constituent fatty acid of 16 to 18 carbons in the constituent fatty acid contained in the interesterified oils and fats is preferably 35 to 65 mass%, more preferably 40 to 60 mass%, and further preferably 42 to 58 mass%. Specifically, palmitic acid and stearic acid are preferred as the above-described saturated constituent fatty acid of 16 to 18 carbons. Furthermore, the content (hereinafter, also indicated as C16/C16 to 18) of the saturated constituent fatty acid of 16 carbons in the above-described saturated constituent fatty acid of 16 to 18 carbons is 20 mass% or more, preferably 30 mass% or more, and more preferably 35 to 75 mass%. When the content of the saturated constituent fatty acid of 16 to 18 carbons in the constituent fatty acid contained in the interesterified oils and fats falls within the above-described range, plasticity can be suitably imparted to chocolate containing the interesterified oils and fats.

The interesterified oils and fats are not particularly limited as long as the interesterified oils and fats contain constituent fatty acid of 6 to 10 carbons and saturated constituent fatty acid of 16 to 18 carbons of the above-described compositions. In particular, the raw material fats and oils and manufacturing method for the interesterified oils and fats are not particularly limited as long as they are suitable for edible applications. However, interesterified oils and fats between triacylglycerol (hereinafter, also indicated as MCT) containing constituent fatty acid of 6 to 10 carbons and fully hydrogenated oil or palm stearin as palm-based fats and oils are preferred as the raw material fats and oils. Here, the content of saturated constituent fatty acid of 16 to 18 carbons in the constituent fatty acid contained in the above-described palm-based fats and oils is 80 mass% or more. Examples of such palm-based fats and oils include palm oil, fractionated oil of palm oil, and processed oil thereof (oil subjected to one or more of hydrogenating, interesterification and fractionation). Specific examples thereof may include palm olein and palm stearin as one-stage fractionated oil, palm olein (palm super olein) and palm mid-fraction as two-stage fractionated oil of palm olein, and palm olein (soft palm) and palm stearin (hard stearin) as two-stage fractionated oil of palm stearin.

A method of interesterification for preparing the interesterified oils and fats is not particularly limited. Either of chemical interesterification and enzymatic interesterification can be used. It is noted that chemical interesterification is performed using, as a catalyst, a chemical catalyst such as sodium methylate. That reaction is non-selective interesterification having low position selectivity.

Chemical interesterification can be performed by, for example, the following operation according to a method known in the art. That is, an interesterification reaction can be performed by stirring catalyst-containing raw material fats and oils obtained by adding 0.1 to 1 mass% of a catalyst to sufficiently dried raw material fats and oils, under reduced pressure at 80 to 120°C for 0.5 to 1 hour. After completion of the interesterification reaction, the catalyst is removed from a reaction product through washing with water. The obtained crude fats and oils can be subjected to a bleaching and deodorizing treatment usually performed in a purification process of edible oil.

Enzymatic interesterification is performed using a lipase preparation as a catalyst. Selective catalysis possessed by the lipase preparation enables interesterification with 1,3-position selectivity. Enzymatic interesterification can be performed by, for example, the following operation according to a method known in the art. That is, an interesterification reaction can be performed by stirring enzyme-containing raw material fats and oils obtained by adding 0.01 to 5 mass% of a lipase preparation to raw material fats and oils, at 30 to 70°C for 1 to 40 hours. After completion of the interesterification reaction, the lipase preparation is removed from a reaction product through filtration. The obtained crude fats and oils can be subjected to a bleaching and deodorizing treatment usually performed in a purification process of edible oil.

The interesterified oils and fats may be ester synthetic fats and oils containing constituent fatty acid of 6 to 10 carbons and saturated constituent fatty acid of 16 to 18 carbons of the above-described compositions. This ester synthetic fats and oils can be manufactured in a typical known method. For example, the ester synthetic fats and oils can be manufactured by heating fatty acid of 6 to 10 carbons, saturated fatty acid of 16 to 18 carbons, and glycerol to 120 to 180°C, and dehydrating and condensing the heated product. This condensation reaction is preferably performed under reduced pressure. A catalyst may be used in the above-described condensation reaction. However, it is preferred not to use a catalyst in the condensation reaction.

### Chocolate of the present invention

As described herein, chocolate is not limited to the chocolate defined in "Fair Competition Codes concerning Labeling on Chocolates" (Japan Chocolate Industry Fair Trade Conference) or laws and regulations. The main raw material of the chocolate according to the present invention is edible fats and oils and saccharides. Cacao components (cacao mass, cocoa powder, and the like), dairy products, flavors, emulsifiers, and the like are added to the main raw material as necessary. Such chocolate is manufactured through chocolate manufacturing processes (all or some of a mixing process, refining process, conching process, molding process, cooling process, and the like). Also, the chocolate according to the present invention includes white chocolate and color chocolate as well as dark chocolate and milk chocolate.

The chocolate according to the present invention contains 25 to 65 mass% of fats and oils. The content of fats and oils in the chocolate according to the present invention is preferably 28 to 60 mass%, and more preferably 30 to 55 mass%. It is noted that the fats and oils contained in the chocolate according to the present invention include fats and oils (cocoa butter, milk fat, and the like) derived from an oil-containing raw material (cacao mass, cocoa powder, whole milk powder, and the like), other than the fats and oils to be formulated. For example, in general, the content (oil percentage) of fats and oils (cocoa butter) in cacao mass is 55 mass%; the content (oil percentage) of fats and oils (cocoa butter) in cocoa powder is 11 mass%; and the content (oil percentage) of fats and oils (milk fat) in whole milk powder is 25 mass%. Therefore, the content of fats and oils in chocolate comes to be a sum of the values each obtained by multiplying a formulated amount (mass%) of each raw material in chocolate by the oil percentage.

The fats and oils contained in the chocolate according to the present invention contain 20 mass% or more of the interesterified oils and fats. The content of the interesterified oils and fats in the fats and oils contained in the chocolate is preferably 40 mass% or more, more preferably 60 mass% or more, and further preferably 70 to 98 mass%. When the content of the interesterified oils and fats in the fats and oils contained in the chocolate falls in the above-described range, plasticity suitable for a non-molding process can be suitably imparted to chocolate.

The chocolate according to the present invention may be either tempered-type chocolate or non-tempered-type chocolate. In particular, the non-tempered-type chocolate can be more suitably subjected to a non-molding process.

For manufacturing the chocolate according to the present invention, any fats and oils raw material, other than 20 mass% or more of the interesterified oils and fats contained in the fats and oils contained in the chocolate, can be used, as long as it does not impair the effect of the present invention and is suitable for edible applications. Examples of a usable fats and oils raw material may include coconut oil, palm kernel oil, palm oil, fractionated palm oil (palm olein, palm super olein, and the like), shea butter, fractionated shea oil, sal fat, fractionated sal oil, illipe butter, soy bean oil, rapeseed oil, cottonseed oil, safflower oil, sunflower oil, rice oil, corn oil, sesame oil, olive oil, milk fat, and cocoa butter, as well as mixed oil and processed fats and oils thereof.

The chocolate according to the present invention preferably contains saccharides other than fats and oils. Examples of usable saccharides may include sucrose (sugar and powder sugar), lactose, glucose, fructose, maltose, reduced saccharified starch, liquid sugar, enzymatically converted starch syrup, isomerized liquid sugar, sucrose-combined millet jelly, reducing sugar polydextrose, oligosaccharide, sorbitol, reduced lactose, trehalose, xylose, xylitose, maltitol, erythritol, mannitol, raffinose, and dextrin. The content of saccharides in the chocolate according to the present invention is preferably 20 to 60 mass%, more preferably 25 to 55 mass%, and further preferably 30 to 50 mass%.

Other than fats and oils as well as saccharides, raw materials commonly formulated in chocolate can also be used in the chocolate according to the present invention. Specific examples of usable raw materials may include dairy products such as whole milk powder and skim milk, cacao components such as cacao mass and cocoa powder, soy flour, soy protein, processed fruit products, processed vegetable products, various powders such as green tea powder and coffee powder, gums, starches, emulsifiers, antioxidants, colorants, and flavors.

The chocolate according to the present invention can be manufactured by a typical known method. Examples of the raw materials usable in manufacturing the chocolate according to the present invention may include fats and oils, cacao components, saccharides, dairy products, and emulsifiers. The chocolate according to the present invention can be manufactured through a mixing process, refining process, conching process, and cooling process such that the content of fats and oils in the chocolate according to the present invention finally reaches 25 to 65 mass%.

For performing a non-molding process to the chocolate according to the present invention, melted chocolate is cooled and solidified into a plate-like shape in the cooling process. Subsequently, the solidified chocolate is cut using a layer cut apparatus. Alternatively, cooled and solidified block-like chocolate may be extruded with an extruder adjusted at about 20°C. When the chocolate according to the invention of the present application is cooled and solidified into a plate-like shape, the thickness thereof is preferably 3 to 12 mm, and more preferably 4 to 10 mm. The chocolate cooled and solidified into a plate-like shape can be cut into pieces having a desired size and shape such as a cube-like or rectangular parallelepiped-like shape, with a cut blade or the like.

The chocolate according to the present invention is chocolate that is suitable for the non-molding process as described above. Therefore, the chocolate has soft initial bite textures and quick and smooth melting mouthfeel. The chocolate according to the present invention is edible as a block of chocolate having been cut or extruded. Furthermore, the chocolate according to the present invention can be used as coating materials, filling materials, or chip materials to be mixed into dough for bread baking products such as bread, cakes, western confectionery, baked confectionery, doughnuts, and cream puffed cakes.

### EXAMPLES

Next, the present invention will be further described in detail with reference to examples and comparative examples. The present invention is not limited by these examples and comparative examples, but rather by the scope of the claims.

As described herein, "%" means mass% unless specifically indicated.

The constituent fatty acid contained in fats and oils was analyzed by gas chromatography (in accordance with AOCS Celf-96).

### <Raw material fats and oils>

### [MCT 1]

As MCT 1, there was used MCT (manufactured in-house by The Nisshin OilliO Group, Ltd.) which includes as constituent fatty acid only n-octanoic acid (8 carbons) or n-decanoic acid (10 carbons) and has a mass ratio between the n-octanoic acid and the n-decanoic acid as the constituent fatty acid is 30 : 70.

### [Interesterified oils and fats 1]

Mixed oil between 50 parts by mass of MCT 1 and 50 parts by mass of fully hydrogenated palm oil (manufactured by Yokozeki Oil & Fat Industries Co., Ltd., iodine value: 1) was heated under reduced pressure to 120°C thereby to be sufficiently dried. Thereafter, 0.1 mass% of sodium methylate was added to the dried mixed oil. The obtained sodium methylate-containing mixed oil was stirred under reduced pressure at 110°C for 0.5 hours to perform an interesterification reaction. After completion of the reaction, sodium methylate was removed from a reaction product through washing with water. The obtained crude fats and oils was subjected to a bleaching and deodorizing treatment according to an ordinary purification method thereby to obtain interesterified oils and fats 1 (in constituent fatty acid, content of constituent fatty acid of 6 to 10 carbons: 47.4%, content of constituent fatty acid of 6 carbons: 0%, content of constituent fatty acid of 10 carbons: 33.2%, content of palmitic acid (saturated constituent fatty acid of 16 carbons): 23.2%, content of stearic acid (saturated constituent fatty acid of 18 carbons): 28.3%).

### [Interesterified oils and fats 2]

Mixed oil between 40 parts by mass of MCT 1 and 60 parts by mass of palm stearin (manufactured in-house by The Nisshin OilliO Group, Ltd., iodine value: 13) was heated under reduced pressure to 120°C thereby to be sufficiently dried. Thereafter, 0.1 mass% of sodium methylate was added to the dried mixed oil. The obtained sodium methylate-containing mixed oil was stirred under reduced pressure at 110°C for 0.5 hours to perform an interesterification reaction. After completion of the reaction, sodium methylate was removed from a reaction product through washing with water. The obtained crude fats and oils was subjected to a bleaching and deodorizing treatment according to an ordinary purification method thereby to obtain interesterified oils and fats 2 (in constituent fatty acid, content of fatty acid of 6 to 10 carbons: 37.1%, content of constituent fatty acid of 6 carbons: 0%, content of constituent fatty acid of 10 carbons: 26.0%, content of palmitic acid: 53.2%, content of stearic acid: 2.7%).

### [Interesterified oils and fats 3]

Mixed oil between 70 parts by mass of MCT 1 and 30 parts by mass of fully hydrogenated palm oil (manufactured by Yokozeki Oil & Fat Industries Co., Ltd., iodine value: 1) was heated under reduced pressure to 120°C thereby to be sufficiently dried. Thereafter, 0.1 mass% of sodium methylate was added to the dried mixed oil. The obtained sodium methylate-containing mixed oil was stirred under reduced pressure at 110°C for 0.5 hours to perform an interesterification reaction. After completion of the reaction, sodium methylate was removed from a reaction product through washing with water. The obtained crude fats and oils was subjected to a bleaching and deodorizing treatment according to an ordinary purification method thereby to obtain interesterified oils and fats 3 (in constituent fatty acid, content of constituent fatty acid of 6 to 10 carbons: 68.0%, content of constituent fatty acid of 6 carbons: 0%, content of constituent fatty acid of 10 carbons: 47.6%, content of palmitic acid: 14.1%, content of stearic acid: 17.2%).

### [Interesterified oils and fats 4]

Mixed oil between 50 parts by mass of MCT 1 and 50 parts by mass of fully hydrogenated rapeseed oil (manufactured by Yokozeki Oil & Fat Industries Co., Ltd., iodine value: 1) was heated under reduced pressure to 120°C thereby to be sufficiently dried. Thereafter, 0.1 mass% of sodium methylate was added to the dried mixed oil. The obtained sodium methylate-containing mixed oil was stirred under reduced pressure at 110°C for 0.5 hours to perform an interesterification reaction. After completion of the reaction, sodium methylate was removed from a reaction product through washing with water. The obtained crude fats and oils was subjected to a bleaching and deodorizing treatment according to an ordinary purification method thereby to obtain interesterified oils and fats 4 (in constituent fatty acid, content of constituent fatty acid of 6 to 10 carbons: 48.9%, content of fatty acid of 6 carbons: 0%, content of constituent fatty acid of 10 carbons: 34.2%, content of palmitic acid: 2.6%, content of stearic acid: 46.0%).

### [Other fats and oils]

Cocoa butter (manufactured by DAITO CACAO CO.,LTD.) and fully hydrogenated palm oil (manufactured by Yokozeki Oil & Fat Industries Co., Ltd., iodine value: 1) were used as other fats and oils.

### <Manufacture of chocolate>

Chocolates of Examples 1 to 2 and Comparative Examples 1 to 4 according to formulations in Tables 1 and 2 were cooled and solidified into a plate-like shape with a thickness of 7 mm by a method known in the art through mixing, refining and conching. The obtained chocolates were evaluated for quality by the methods described later.

**[Table 1]**

| [Table 1] Formulation and evaluation of chocolate | | | |
|---|---|---|---|
| | Example 1 | Example 2 | Comparative Example 1 |
| Formulation of raw materials (%) | | | |
| Interesterified oils and fats 1 | 38.0 | - | - |
| Interesterified oils and fats 2 | - | 34.0 | - |
| Interesterified oils and fats 3 | - | - | - |
| Interesterified oils and fats 4 | - | - | - |
| MCT 1 | - | - | 18.0 |
| Fully hydrogenated palm oil | - | - | 6.0 |
| Cocoa butter | - | 4.0 | 14.0 |
| Cocoa powder | 18.18 | 18.18 | 18.18 |
| Powder sugar (sugar) | 43.27 | 43.27 | 43.27 |
| Lecithin | 0.5 | 0.5 | 0.5 |
| Flavors | 0.05 | 0.05 | 0.05 |
| Total of raw materials | 100 | 100 | 100 |
| Fats and oils content in chocolate (%) | 40.0 | 40.0 | 40.0 |
| Interesterified oils and fats content in fats and oils (%) | 95 | 85 | 0 |
| C6 to 10 in interesterified oils and fats (%) | 47.4 | 37.1 | - |
| C16 to 18 in interesterified oils and fats (%) | 51.5 | 55.9 | - |
| C16/C16 to 18 in interesterified oils and fats (%) | 45.0 | 95.2 | - |
| Evaluation result | | | |
| Cutting | Excellent | Excellent | Excellent |
| Melting Mouthfeel | Excellent | Good | Poor |

**[Table 2]**

| [Table 2] Formulation and evaluation of chocolate | | | |
|---|---|---|---|
| | Comparative Example 2 | Comparative Example 3 | Comparative Example 4 |
| Formulation of raw materials (%) | | | |
| Interesterified oils and fats 1 | 4.0 | - | - |
| Interesterified oils and fats 2 | - | - | - |
| Interesterified oils and fats 3 | - | 38.0 | - |
| Interesterified oils and fats 4 | - | - | 38.0 |
| MCT 1 | - | - | - |
| Fully hydrogenated palm oil | - | - | - |
| Cocoa butter | 34.0 | - | - |
| Cocoa powder | 18.18 | 18.18 | 18.18 |
| Powder sugar (sugar) | 43.27 | 43.27 | 43.27 |
| Lecithin | 0.5 | 0.5 | 0.5 |
| Flavors | 0.05 | 0.05 | 0.05 |
| Total of raw materials | 100 | 100 | 100 |
| Fats and oils content in chocolate | 40.0 | 40.0 | 40.0 |
| Interesterified oils and fats content in fats and oils (%) | 10 | 95 | 95 |
| C6 to 10 in interesterified oils and fats (%) | 47.4 | 68.0 | 48.9 |
| C16 to 18 in interesterified oils and fats (%) | 51.5 | 31.3 | 48.6 |
| C16/C16 to 18 in interesterified oils and fats (%) | 45.0 | 45.0 | 5.3 |
| Evaluation result | | | |
| Cutting | Somewhat fair | Poor | Excellent |
| Melting Mouthfeel | Somewhat fair | Good | Poor |

### <Evaluation of chocolate>

The plate-like chocolates of Examples 1 to 2 and Comparative Examples 1 to 4 manufactured as described above were evaluated for cutting and melting mouthfeel in accordance with the following evaluation methods. The result is indicated in Tables 1 and 2.

### <Evaluation method of chocolate>

### (1) Evaluation method of cutting

In accordance with the following evaluation criteria, workability of cutting with an edged tool was evaluated.
Excellent: No cracks and smooth cutting, very favorable
Good: Cutting without cracks, favorable
Somewhat fair: Some cracks
Poor: Broken or adhered to edged tool

### (2) Evaluation method of melting mouthfeel

In accordance with the following criteria, evaluation was comprehensively performed by five panelists.
Excellent: Smoothly melts, very favorable
Good: Smoothly melts, favorable
Somewhat fair: Moderate melting mouthfeel
Poor: Bad melting mouthfeel

## Claims

1. Chocolate containing fats and oils that form a continuous phase, wherein fats and oils contained in the chocolate contain 20 mass% or more of interesterified oils and fats comprising constituent fatty acid, **characterized in that**
of a total amount of the constituent fatty acid, constituent fatty acid of 6 to 10 carbons represents 20 to 65 mass%, and saturated constituent fatty acid of 16 to 18 carbons represents 35 to 80 mass%, and
a content of saturated constituent fatty acid of 16 carbons in the saturated constituent fatty acid of 16 to 18 carbons is 20 mass% or more, and
a content of constituent fatty acid of 6 carbons in the constituent fatty acid of 6 to 10 carbons is 20 mass% or less.

2. The chocolate according to claim 1, wherein the chocolate is subjected to a non-molding process.

## Patentansprüche

1. Schokolade, die Fette und Öle enthält, die eine kontinuierliche Phase bilden, wobei die in der Schokolade enthaltenen Fette und Öle 20 Massen-% oder mehr an umgeesterten Ölen und Fetten enthalten, die eine konstituierende Fettsäure umfassen, **dadurch gekennzeichnet, dass**
von der Gesamtmenge der konstituierenden Fettsäure die konstituierende Fettsäure mit 6 bis 10 Kohlenstoffen 20 bis 65 Massen-% darstellt und die gesättigte konstituierende Fettsäure mit 16 bis 18 Kohlenstoffen 35 bis 80 Massen-% darstellt, und
ein Gehalt der gesättigten konstituierenden Fettsäure mit 16 Kohlenstoffen in der gesättigten konstituierenden Fettsäure mit 16 bis 18 Kohlenstoffen 20 Massen-% oder mehr beträgt, und
ein Gehalt der konstituierenden Fettsäure mit 6 Kohlenstoffen in der konstituierenden Fettsäure mit 6 bis 10 Kohlenstoffen 20 Massen-% oder weniger beträgt.

2. Schokolade nach Anspruch 1, wobei die Schokolade einem nicht-formenden Verfahren unterzogen wird.

## Revendications

1. Chocolat contenant des graisses et des huiles qui forment une phase continue, dans lequel les graisses et les huiles contenues dans le chocolat contiennent 20 % en masse ou plus d'huiles et de graisses interestérifiées comprenant un acide gras constitutif, **caractérisé en ce que**
par rapport à la quantité totale d'acide gras constitutif, l'acide gras constitutif comptant 6 à 10 atomes de carbone représente 20 à 65 % en masse et l'acide gras constitutif saturé comptant 16 à 18 atomes de carbone représente 35 à 80 % en masse, et
la teneur de l'acide gras constitutif saturé comptant 16 à 18 atomes de carbone en acide gras constitutif saturé comptant 16 atomes de carbone représente 20 % en masse ou plus, et
la teneur l'acide gras constitutif comptant 6 à 10 atomes de carbone de en acide gras constitutif comptant 6 atomes de carbone représente 20 % en masse ou moins.

2. Chocolat selon la revendication 1, le chocolat étant soumis à un procédé de non-moulage.
